# EUROPEAN PATENT SPECIFICATION

(11) **EP 3 153 486 B1**
(45) Date of publication and mention of the grant of the patent: **03.04.2024**
(21) Application number: 16192215.8
(22) Date of filing: 04.10.2016
(51) Int. Cl.: C04B 41/89, C04B 41/91, F01D 5/28

(54) **METHOD FOR COATING REMOVAL**
VERFAHREN ZUM ENTFERNEN VON BESCHICHTUNGEN
PROCÉDÉ D'ÉLIMINATION DE REVÊTEMENT

(30) Priority: 08.10.2015 US 201514878192
(43) Date of publication of application: 12.04.2017
(73) Proprietor: General Electric Company, Schenectady, NY 12345 (US)
(72) Inventor: WAN, Julin, Niskayuna, NY New York 12309 (US); CAO, Hongbo, Niskayuna, NY New York 12309 (US)
(74) Representative: Openshaw & Co.

(56) References cited:
- US-A1- 2015 059 802

## Description

### BACKGROUND

This disclosure generally relates to materials and articles for service in high-temperature applications such as, for example, turbomachinery. More specifically, this disclosure relates to methods for removing coatings from ceramic-matrix composite substrates.

Ceramic matrix composite (CMC) materials offer the potential for higher operating temperatures than do metal alloy materials due to the inherent high-temperature material properties of ceramic materials. In applications such as gas turbine assemblies, this capability may be translated into a reduced cooling requirement which, in turn, may result in higher power, greater efficiency, and/or reduced emissions from the machine. However, CMC materials that include significant amounts of silicon-bearing materials, such as silicon carbide or silicon nitride, are susceptible to attack and rapid recession by water vapor at elevated service temperatures. Environmental barrier coatings (EBC) have been developed to inhibit this degradation mechanism.

During service, one or more portions of the EBC may become damaged, but because CMC components typically are expensive, removing the damaged EBC and re-coating the used CMC component is economically advantageous over replacing the entire component. EBC's can be removed by mechanical processes such as grit blasting, but such operations may lead to damage of the CMC substrate due to the desirably strong bonding between CMC and EBC. US 2015/059802 A discloses a chemical method of removing a bond coat from a CMC using a hydroxide.

There is thus a need in the industry for methods for removing coatings such as EBC from CMC substrates without unduly damaging the CMC material.

### BRIEF DESCRIPTION

According to one aspect of the invention, a method for removing a material from an article as defined in claim 1 is provided.

The article may be heated at the processing temperature in the described environment until a desired degree of reaction between first material and second material has occurred, and then the third material is removed from substrate.

### DRAWINGS

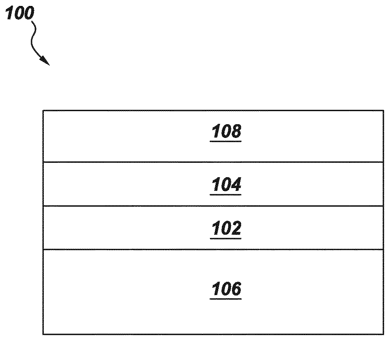

These and other features, aspects, and advantages of the present invention will become better understood when the following detailed description is read with reference to the accompanying drawing in which like characters represent like parts, wherein:

The Figure is a schematic cross-section of an article treated in accordance with the description herein.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

In the following specification and the claims, the singular forms "a", "an" and "the" include plural referents unless the context clearly dictates otherwise. As used herein, the term "or" is not meant to be exclusive and refers to at least one of the referenced components being present and includes instances in which a combination of the referenced components may be present, unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

The techniques described herein may facilitate the partial or complete removal of coatings, such as EBC, or other overlying material, from silicon-bearing substrates, with low mechanical force relative to conventional coating removal techniques. The term "coating" as used herein simply refers to a quantity of material disposed over another material; this term does not imply anything about the nature of the material, in particular as to whether the overlying material forms a continuous layer on the underlying material. Thus a "coating" as that term is used herein may be continuously or discretely disposed on the underlying material ("substrate"). The term "silicon-bearing" is used herein to mean any material that includes, but is not limited to, silicon. Examples of such materials include without limitation elemental silicon, alloys and solid solutions that include silicon as a component, and compounds that include silicon.

Referring to the Figure, an article 100 in accordance with the techniques disclosed herein generally includes a first material 102 in contact with a second material 104. In certain embodiments, article 100 is a component of a gas turbine assembly, such as, for example, a combustion liner, transition piece, shroud, vane, or blade. First material 102 comprises elemental silicon; an alloy that includes elemental silicon; a silicide; silicon carbide; silicon nitride, or a combination that includes one or more of these example materials. Article 100 includes a substrate, with first material 102 disposed over substrate 106, either directly in contact or with one or more interposed coatings (not shown). Substrate 106 includes a ceramic matrix composite (CMC). The CMC includes silicon carbide, silicon nitride, or combinations of one or more of these. A particular example of such CMC is a material that includes a matrix and a reinforcement phase, where the matrix includes silicon carbide and the reinforcement phase includes silicon carbide fibers.

Second material 104 includes an oxide including silicon. This oxide may include, for example, silica, a silicate, or a combination including one or both of these. In one example, the oxide of second material 104 is the product of oxidation of one or more components of first material 102, such as the so-called "thermally grown oxide" (often abbreviated "TGO") that forms on silicon-bearing coatings and/or substrates during high temperature service in oxidizing environments. For instance, where substrate 106 includes a CMC, first material 102 may be disposed over substrate 106 as a bond coat comprising silicon, often elemental silicon; the silicon in the bond coat oxidizes during service to form a silicon-bearing TGO, which in the parlance of this disclosure corresponds to second material 104.

Article 100 further includes a third material 108 disposed over second material 104, either directly in contact with second material 104 or with one or more interposed layers (not shown). Third material 108 includes an oxide, such as one or more of the oxide materials commonly used in the art for thermal barrier coating (TBC) and/or environmental barrier coating (EBC). Examples include silicates, such as silicates including one or more rare earth elements; aluminosilicates, such as aluminosilicate compounds including one or more alkaline-earth elements; and zirconia, such as yttria-stabilized zirconia. In one illustrative example, substrate 106 includes a CMC such as a CMC including silicon carbide; first material 102 includes a silicon-bearing bond coat; and third material 108 includes an oxide top coat commonly used in EBC. The second material 104, in this example, is a silicon-bearing oxide, such as a TGO, disposed between the bond coat and the top coat.

A method for removing a coating, such as the oxide layers of an EBC, or other overlying material from a silicon-bearing substrate, such as a CMC, includes promoting a reaction between the silicon of first material 102 with the silicon-bearing oxide of second material 104 at elevated temperature. This reaction between first material 102 and second material 104 produces silicon monoxide vapor, which has a very high equilibrium pressure compared to other relevant reactions, such as thermal decomposition of silica. The reaction involves equilibrium among 4 phases, including the oxide, the silicon, the silicon monoxide, and oxygen. Where silicon monoxide vapor product is removed from contact with the first material 102 and second material 104 rapidly enough to avoid buildup to equilibrium vapor pressure, and where the partial pressure of oxygen remains at levels sufficiently low to promote the reaction, the reaction will continue to run for as long as these temperature and pressure conditions are maintained, until second material 104 is spent. This reaction essentially vaporizes the connection between substrate 106 and any material disposed over substrate 106, such as third material 108, allowing this material to become detached from the substrate 106 with little or no mechanical force. Free edges of article 100, along with surface-connected cracks, pores, and any other openings in third material 108, allow the SiO reaction product to escape, preventing buildup of reaction product and accelerating the removal process.

Based on the above mechanism, one embodiment of a method in accordance with the present disclosure includes heating article 100 to a processing temperature in an environment having a partial pressure of oxygen that is less than an equilibrium partial pressure of oxygen for chemical equilibrium between first material 102 and second material 104 at the processing temperature. In some embodiments, this heating is performed in a vacuum environment, that is, in an environment having a total pressure that is less than atmospheric pressure. In some embodiments, the total pressure of the vacuum environment is less than 1.3 Pa (10⁻² torr), and in certain embodiments the total pressure is less than 1.3·10⁻³ Pa (10⁻⁵ torr). A lower total pressure helps to drive faster reaction rates. Similarly, the rate of the reaction is also dependent on temperature, but to a stronger degree. A higher temperature results in faster reaction kinetics. For example, to completely remove a 20 micrometer thick layer of silica-bearing TGO to a distance of about 1.3 cm (0.5 inch) from a free edge of a coated part, heating in vacuum to a temperature of 1200 degrees Celsius requires about 32 hours, a temperature of 1300 degrees Celsius requires about 6 hours, and a temperature of 1400 degrees Celsius requires about 1.2 hours. In some embodiments, the processing temperature is at least 1200 degrees Celsius, and in particular embodiments, the processing temperature is at least 1300 degrees Celsius. Of course, a practical upper limit for temperature may be determined by the particular circumstances; for instance, if the substrate 106 includes temperature-sensitive material, such as elemental silicon, it may be desirable to remain below the melting point of this material to avoid damaging the substrate 106.

Heating of article 100 to maintain a temperature as described above may be continued for a time until a desired amount of material removal has taken place. The selected time depends on several factors, such as the temperature and pressure of the heating environment, the size of the article to be treated, and the availability of escape paths for the reaction product vaporizing away from the site of the reaction between first material 102 and second material 104. If essentially all of at least one of the reaction products is consumed, then any overlying materials, such as third material 108, may be readily removed from substrate 106 by simply sliding it away from substrate 106 if the geometry allows; in some cases, such as where the overlying material completely encases substrate 106, or where geometry is complex, the overlying material may have to be fractured before it can be removed in one or more sections. In some embodiments, it may not be necessary to completely vaporize first and/or second materials; the connection they provide between substrate 106 and overlying materials may be degraded to a point where only a small mechanical force is needed to remove the overlying material, significantly reducing the risk of damage to the CMC substrate 106. Any convenient method for removing the overlying material may be applied, such as grit blasting, water impingement, air impingement, or other appropriately selected method that will not unduly damage the substrate 106.

### EXAMPLES

The following examples are presented to further illustrate non-limiting embodiments of the present invention.

To further illustrate the features described above, a particular embodiment of the invention is a method for removing a coating from an article. The method includes heating the article to a processing temperature at least about 1200 degrees Celsius in a vacuum having a total pressure less than about 1.3 Pa (10⁻² torr). The article 100 includes a substrate 106 comprising a ceramic matrix composite, the composite comprising silicon carbide, silicon nitride, or a combination comprising one or both of the aforementioned; a first material 102 disposed over the substrate 106 and including elemental silicon, an alloy comprising elemental silicon, a silicide, or a combination comprising one or more of the aforementioned; a second material 104 in contact with the first material 102, the second material comprising silica, a silicate, or a combination comprising one or both of the aforementioned, and a third material 108 disposed over the second material 104, the third material 108 comprising a rare earth silicate, an aluminosilicate, zirconia, or a combination comprising one or more of the aforementioned. The article 100 is heated at the processing temperature in the described environment until a desired degree of reaction between first material 102 and second material 104 has occurred, and then the third material 108 is removed from substrate 106.

In a method, which is not within the scope of the claims, a CMC substrate of silicon-carbide matrix with silicon carbide fiber reinforcement was coated with a bondcoat of elemental silicon and an oxide topcoat, and the coated CMC was subjected to about 2000 total hours of exposure to steam at about 1315 degrees Celsius. The exposed article was then placed in a vacuum furnace and heated to a processing temperature of about 1300 degrees Celsius for 75 hours. Upon cooling, complete separation of the topcoat from the substrate was observed. The topcoat easily slid off of the surface of the substrate.

## Claims

1. A method for removing a coating from an article (100) the article (100) comprising:
a substrate (106) comprising a ceramic matrix composite, the composite comprising silicon carbide, silicon nitride, or a combination comprising of the aforementioned;
a first material (102) disposed over the substrate (106), the first material (102) comprising elemental silicon, an alloy comprising elemental silicon, a silicide, silicon carbide, silicon nitride, or a combination comprising the aforementioned;
a second material (104) in contact with the first material, the second material (104) comprising an oxide comprising silicon; and
a third material (108) disposed over the second material (104), the third material (108) comprising an oxide;
the method comprising:
heating the article (100) to a processing temperature in an environment having a partial pressure of oxygen that is less than an equilibrium partial pressure of oxygen for chemical equilibrium between the first material (102) and the second material (104) at the processing temperature; and
removing the third material (108), and hence the coating, from the article (100).

2. The method of claim 1, wherein the environment has a total pressure that is less than atmospheric pressure.

3. The method of claim 1, wherein the environment is a vacuum having a total pressure less than 1.3 Pa (10⁻² torr).

4. The method of claim 3, wherein the total pressure is less than 1.3·10⁻³ Pa (10⁻⁵ torr).

5. The method of claim 1, wherein the processing temperature is at least 1000 degrees Celsius.

6. The method of claim 1, wherein the processing temperature is at least 1200 degrees Celsius.

7. The method of claim 1, wherein the processing temperature is at least 1300 degrees Celsius.

8. The method of claim 1, wherein the oxide of the second material comprises silica, a silicate, or a combination comprising the aforementioned.

9. The method of claim 1, wherein the oxide of the third material (108) comprises a rare earth silicate, an aluminosilicate, zirconia, or a combination comprising the aforementioned.

## Patentansprüche

1. Verfahren zum Entfernen einer Beschichtung aus einem Artikel (100), der Artikel (100) umfassend:
ein Substrat (106), umfassend einen Keramikmatrix-Verbundwerkstoff, der Verbundwerkstoff umfassend Siliciumcarbid, Siliciumnitrid oder eine Kombination, umfassend das oben genannte;
ein erstes Material (102), das über dem Substrat (106) angeordnet ist, das erste Material (102) umfassend elementares Silicium, eine Legierung, umfassend elementares Silicium, ein Silicid, Siliciumcarbid, Siliciumnitrid oder eine Kombination, umfassend das oben genannte;
ein zweites Material (104) in Kontakt mit dem ersten Material, das zweite Material (104) umfassend ein Oxid, umfassend Silicium; und
ein drittes Material (108), das über dem zweiten Material (104) angeordnet ist, das dritte Material (108) umfassend ein Oxid; das Verfahren umfassend:
Erwärmen des Artikels (100) auf eine Verarbeitungstemperatur in einer Umgebung, die einen Sauerstoffpartialdruck aufweist, der niedriger als ein Gleichgewichtssauerstoffpartialdruck für das chemische Gleichgewicht zwischen dem ersten Material (102) und dem zweiten Material (104) bei der Verarbeitungstemperatur ist; und
Entfernen des dritten Materials (108) und somit der Beschichtung aus dem Artikel (100).

2. Verfahren nach Anspruch 1, wobei die Umgebung einen Gesamtdruck aufweist, der kleiner als der Atmosphärendruck ist.

3. Verfahren nach Anspruch 1, wobei die Umgebung ein Vakuum ist, das einen Gesamtdruck von weniger als 1,3 Pa (10⁻² torr) aufweist.

4. Verfahren nach Anspruch 3, wobei der Gesamtdruck niedriger als 1,3·10⁻³ Pa (10⁻⁵ torr) ist.

5. Verfahren nach Anspruch 1, wobei die Verarbeitungstemperatur mindestens 1000 Grad Celsius beträgt.

6. Verfahren nach Anspruch 1, wobei die Verarbeitungstemperatur mindestens 1200 Grad Celsius beträgt.

7. Verfahren nach Anspruch 1, wobei die Verarbeitungstemperatur mindestens 1300 Grad Celsius beträgt.

8. Verfahren nach Anspruch 1, wobei das Oxid des zweiten Materials Siliciumdioxid, ein Silicat oder eine Kombination umfasst, umfassend das oben genannte.

9. Verfahren nach Anspruch 1, wobei das Oxid des dritten Materials (108) ein Seltenerdsilicat, ein Aluminiumsilicat, Zirkondioxid oder eine Kombination umfasst, umfassend das oben genannte.

## Revendications

1. Procédé destiné à retirer un revêtement d'un article (100) de l'article (100) comprenant :
un substrat (106) comprenant un composite à matrice céramique, le composite comprenant du carbure de silicium, du nitrure de silicium, ou une combinaison comprenant des caractéristiques précitées ;
un premier matériau (102) disposé sur le substrat (106), le premier matériau (102) comprenant du silicium élémentaire, un alliage comprenant du silicium élémentaire, un siliciure, du carbure de silicium, du nitrure de silicium, ou une combinaison comprenant les données précitées ;
un deuxième matériau (104) en contact avec le premier matériau, le deuxième matériau (104) comprenant un oxyde comprenant du silicium ; et
un troisième matériau (108) disposé sur le deuxième matériau (104), le troisième matériau (108) comprenant un oxyde ; le procédé comprenant :
le chauffage de l'article (100) à une température de traitement dans un environnement ayant une pression partielle d'oxygène qui est inférieure à une pression partielle d'équilibre d'oxygène pour un équilibre chimique entre le premier matériau (102) et le deuxième matériau (104) à la température de traitement ; et
le retirait du troisième matériau (108), et donc le revêtement, de l'article (100).

2. Procédé selon la revendication 1, dans lequel l'environnement a une pression totale qui est inférieure à la pression atmosphérique.

3. Procédé selon la revendication 1, dans lequel l'environnement est un vide ayant une pression totale inférieure à 1,3 Pa (10⁻² torr).

4. Procédé selon la revendication 3, dans lequel la pression totale est inférieure à 1,3.10⁻³Pa (10⁻⁵ torr).

5. Procédé selon la revendication 1, dans lequel la température de traitement est d'au moins 1000 degrés Celsius.

6. Procédé selon la revendication 1, dans lequel la température de traitement est d'au moins 1200 degrés Celsius.

7. Procédé selon la revendication 1, dans lequel la température de traitement est d'au moins 1300 degrés Celsius.

8. Procédé selon la revendication 1, dans lequel l'oxyde du deuxième matériau comprend de la silice, un silicate, ou une combinaison comprenant le susmentionné.

9. Procédé selon la revendication 1, dans lequel l'oxyde du troisième matériau (108) comprend un silicate de terres rares, un aluminosilicate, de la zircone, ou une combinaison comprenant le susmentionné.
